# EUROPÄISCHE PATENTSCHRIFT

(11) **EP 0 817 938 B1**
(45) Veröffentlichungstag und Bekanntmachung des Hinweises auf die Patenterteilung: **23.10.2002**
(21) Anmeldenummer: 96906740.4
(22) Anmeldetag: 06.03.1996
(51) Int. Cl.: F16L 58/00, F16L 58/18

(54) **KORROSIONSSCHUTZ FÜR STAHLROHRE**
CORROSION PROTECTION FOR STEEL PIPES
PROTECTION CONTRE LA CORROSION POUR TUYAUX EN ACIER

(30) Priorität: 17.03.1995 DE 19509782
(43) Veröffentlichungstag der Anmeldung: 14.01.1998
(73) Patentinhaber: DSM RESINS B.V., 8022 AW Zwolle (NL)
(72) Erfinder: WILHELM, Heinz, D-67454 Hassloch (DE); FOLDA, Thomas, D-67435 Neustadt (DE); MÖBIUS, Karl-Heinz, D-69126 Heidelberg (DE); BÜLTJER, Uwe, D-67065 Ludwigshafen (DE)
(74) Vertreter: den Hartog, Jeroen Hendrikus Joseph
(86) Internationale Anmeldenummer: EP9600942
(87) Internationale Veröffentlichungsnummer: WO96029535

(56) Entgegenhaltungen:
- EP-A- 0 132 219
- EP-A- 0 600 842
- WO-A-93/00214
- DE-C- 4 308 547
- GB-A- 1 448 823
- US-A- 4 510 181
- US-A- 5 373 036
- EPO, File EPODOC, JP 63251692 A, NIPPON STEEL CORP, 881019, Week 8848 (Basic)

## Beschreibung

Die Erfindung betrifft einen Korrosionsschutz an Schweißstellen von mit Kunststoff, insbesondere mit Polyethylen (PE) beschichteten Stahlrohren.

Bei der Verlegung von Pipelines für den Gastransport werden mit PE beschichtete Stahlrohre verwendet. Da die Stahlrohre meist vor Ort verschweißt werden, endet die werkseitig aufgebrachte Beschichtung ca. 15 cm vor der Schweißstelle, da es sonst beim Schweißen zum Verbrennen des PE kommen würde. Nach Verschweißen der Stahlrohre muß die nicht beschichtete Stahlfläche vor Korrosion geschützt werden. Dies ist vor allem bei "Vortriebsrohren" problematisch.

Bei Vortriebsrohren wird das verschweißte Rohr unterirdisch unter Stellen, bei denen ein Aufgraben nicht möglich oder nicht wirtschaftlich ist, z.B. Flüssen, Autobahnen, kleineren Hügeln usw., durch das Erdreich getrieben. Dabei ist wichtig, daß die Beschichtung der Rohre anschließend keine Schädigung aufweist, da andernfalls die bereits verlegten Rohre wieder ausgewechselt werden müssen. Die Beschichtung der Schweißstellen muß unter Baustellenbedingungen aufbringbar sein und möglichst schnell aushärten, da andernfalls längere Stillstandzeiten entstehen, in denen die sehr kostspieligen Vortriebsmaschinen nicht genutzt werden können.

Bei Stahlrohren wird zur Beschichtung der beschriebenen Stahlflächen zur Zeit eine radikalisch härtende Zwei- oder Dreikomponentenspachtelmasse auf Acrylatbasis verwendet, die jedoch sehr aufwendig und unzureichend ist. Alternativ zur Spachtelmasse auf Acrylatbasis wurden deshalb auch Epoxidharzsysteme für diese Anwendung getestet. Bei diesen Systemen muß jedoch bei erhöhter Temperatur nachgehärtet werden, was unter Baustellenbedingungen Probleme bereitet. Die herkömmlichen Beschichtungsmethoden sind also aufwendig und zeitraubend, was auch beim normalen unterirdischen Verlegen von Rohrsträngen aus bereits verschweißten Stahlrohren in vorgefertigte Gräben oder Bohrlöcher nachteilig ist.

Es bestand also die Aufgabe, ein unter Baustellenbedingungen schnell und sicher zu verarbeitendes Beschichtungssystem zu entwickeln, das eine gute Haftung auf Stahl und Kunststoff aufweist.

Diese Aufgabe konnte durch die Verwendung von faserverstärkten Polyesterharzen gelöst werden.

Gegenstand der Erfindung ist demzufolge ein Kunststoffbeschichtetes Stahlrohr mit Korrosionsschutz an den Schweißstellen wobei, das im Bereich der Schweißstellen als Korrosionsschütz, Laminate aus faserverstärkten, gehärteten ungesättigten Polyesterharzen aufgebracht sind, und wobei die Laminate mit den Kunststoffbeschichteten Bereichen überlappen.

Die Stahlrohre haben normalerweise einen Durchmesser von 10 bis 200, vorzugsweise von 15 bis 150 cm und eine Wanddicke von 3 bis 15, vorzugsweise von 4 bis 10 mm. Der unbeschichtete Bereich an den Schweißstellen ist etwa 10 bis 80, vorzugsweise 20 bis 40 cm und die Überlappung ist 3 bis 30, vorzugsweise 5 bis 20 cm breit. Die Kunststoff-Beschichtung ist normalerweise 2 bis 10, vorzugsweise 3 bis 8 mm dick; die erfindungsgemäße Korrosionsschutzschicht ist 0,5 bis 5, vorzugsweise 1 bis 3 mm dicker. Die Stahlrohre sind werkseitig bereits mit Kunststoff beschichtet, wobei eine Polyethylenbeschichtung üblich ist. Grundsätzlich kann jedoch auch mit Polypropylen oder Polyvinylchlorid beschichtet werden.

Ungesättigte Polyesterharze im Sinne der Erfindung sind Mischungen von ungesättigten Polyestern, Vinylestern oder Vinylesterurethanen mit copolymerisierbaren Monomeren.

Ungesättigte Polyester im engeren Sinn sind die üblichen Kondensationsprodukte aus mehrwertigen, insbesondere zweiwertigen Carbonsäuren und deren veresterbaren Derivaten, insbesondere deren Anhydriden und mehrwertigen, insbesondere zweiwertigen Alkoholen, die gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß. Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Dipropylenglykol, Cyclohexandiol-1,2, 2,2-Bis-(p-hydroxycyclohexyl)-propan, Trimethylolpropanmonoallylether oder Butendiol-1,4. Bevorzugt sind Ethylenglykol, Propylenglykol, Diethylenglykol, Dipropylenglykol, Neopentylglykol und deren Mischungen.

Ferner können ein-, drei- oder höherwertige Alkohole, wie z.B. Ethylhexanol, Fettalkohole, Benzylalkohole, 1,2-Di-(allyloxy)-propanol-3, Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinisch ungesättigte, vorzugsweise α,β-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, α-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Propionsäure, Benzoesäure, 1,2,4-Benzoltricarbonsäure oder 1,2,4,5-Benzoltetracarbonsäure. Vorzugsweise verwendet werden Maleinsäure bzw. deren Anhydrid, Fumarsäure und o-Phthalsäureanhydrid.

Das Molverhältnis von ungesättigten zu gesättigten Dicarbonsäuren liegt vorzugsweise zwischen 1:0 und 1:2,5.

Von dem Begriff ungesättigte Polyester im Sinne der Erfindung sind auch Vinylester mit umfaßt.

Unter Vinylestern versteht man gemeinhin Umsetzungsprodukte von Polyepoxiden mit ungesättigten Monocarbonsäuren, vorzugsweise Methacrylsäure. Auch diese Produkte werden in ungesättigten Monomeren, vorzugsweise Styrol, gelöst. Diese Harze werden beispielsweise in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschreiben werden, weisen dagegen höhere Wärmeformbeständigkeiten, aber geringere Zähigkeiten auf.

Kennzeichnend für die Klasse der Vinylesterharze ist die Gruppe 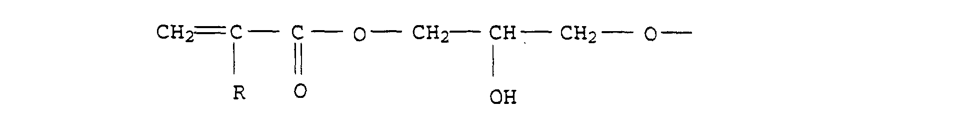 mit R=H oder CH₃.

Schließlich sind auch Vinylesterurethan als ungesättigte Polyester geeignet. Sie weisen im allgemeinen folgende Gruppen auf: 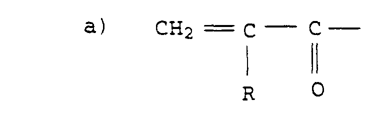 (mit R = H oder CH₃). 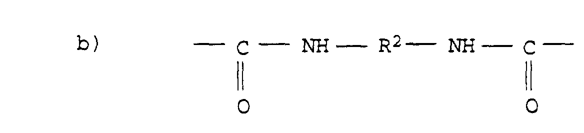 (mit R² = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls

c) - O - R³ - O -

(mit R⁴ = aliphatischer, cycloaliphatischer oder aromatischer Rest mit 2 bis 100 C-Atomen).

Vorzugsweise ist das Vinylesterurethan ein Umsetzungsprodukt aus
- einem polyfunktionellen Isocyanat,
- gegebenenfalls einem mehrwertigen Alkohol,
- gegebenenfalls einem mehrwertigen Amin,
- einem Hydroxyalkyl-(meth)acrylat,
wobei bei der Umsetzung das Gewichtsverhältnis Isocyanat:(Alkohol+Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.

Die ungesättigten Polyesterharze enthalten als Monomeres Styrol. Das Verhältnis Polyester:Styrol liegt dabei vorzugsweise zwischen 20:80 und 90:10, insbesondere zwischen 50:50 und 75:25. Styrol als Comonomeres kann teilweise durch andere übliche ethylenisch polymerisierbare Monomere ersetzt werden, z.B. Vinylverbindungen, wie substituierte Styrole, Ester der Acryl- und Methacrylsäure oder Allylverbindungen, wie Diallylphthalat.

Es sei bemerkt, daß JP-A-63251692 Korrosionsschutz an Schweißstellen beschreibt, wobei die Schweißstelle erst von einer Polyethylenschicht mit einer geprägten Oberfläche bedeckt wird und dann mit einer Glasfaser-vermischten Polyesterharzschicht versehen wird. In EP-A-0600842 wird weiterhin Korrosionsschutz von Rohren beschrieben, wobei eine gesandete Rohre erst mit einer Haftungsgrundierschicht behandelt wird und die Rohre dann mit fotopolymerisierbarem Präpolymer umwickelt wird, wonach Härtung folgt. US-A-5373036 bezieht sich auf die Verwendung von spritzbaren Füllstoffkompositionen zur Bereitung von Dübelmassen, aber solche Kompositionen ergeben Schichten mit unzureichender mechanischer Stärke für die Verwendung bei Korrosionsschutz von Vortriebsrohren. Methoden für das unterirdische Verlegen von Rohren sind unter anderem beschrieben in DE-A-4308547.

Der erfindungsgemäße Korrosionsschutz ist von besonderer Bedeutung bei sogenannten Vortriebsrohren, die unter einem Hindernis unterirdisch in das Erdreich eingetrieben werden. Man geht dabei aus von Stahlrohren, die üblicherweise - entsprechend der Länge der Transportmittel - etwa 10 bis 25 m lang sind. Die Rohre sind mit Kunststoff vorbeschichtet, wobei aber die beiden Enden etwa 5 bis 25 cm weit unbeschichtet sind. Ein solches Rohr wird nun in einen Graben vor dem Hindernis eingelegt und durch vibrierende Bewegung weitgehend in das Erdreich eingetrieben. Dann wird an das aus dem Erdreich herausragende Ende des Rohrs ein weiteres Rohr angeschweißt, und an der Schweißstelle wird der erfindungsgemäße Korrosionsschutz aufgebracht. Die verschweißten Rohre werden dann weiter in das Erdreich eingetrieben und eine drittes Rohr angeschweißt. Dies wird so lange fortgesetzt, bis das Hindernis vollständig unterfahren ist. Auf diese Weise können Rohrleitungen unter mehrere hundert Meter langen Hindernissen durchgeführt werden, z.B. unter Straßen, Autobahnen, Eisenbahngleisen, Flüssen und Hügeln. Aber auch beim normalen Verlegen von Rohrsträngen aus miteinander verschweißten Stahlrohren in Gräben oder Bohrlöchern kann der erfindungsgemäße Korrosionsschutz mit Vorteil angewandt werden.

Beim Aufbringen des Korrosionsschutzes auf unbeschichtete Schweißstellen der Stahlrohre werden zunächst mit Harz getränkte Matten, Gewebe oder Vliese auf das Stahlrohr aufgebracht und dann das Harz gehärtet. Es ist aber auch möglich, die Fasergebilde auf die Schweißstelle aufzubringen, dort mit dem Harz zu tränken und dieses zu härten, oder umgekehrt erst das - vorzugsweise thixotropierte - Harz auf die Schweißstelle aufzustreichen, dann das Fasergebilde aufzulegen, in das Harz einzudrücken und dieses zu härten.

Die flächigen Fasergebilde bestehen vorzugsweise aus Glasfasern, es können aber auch organische Fasern, z.B. aus Polyester verwendet werden. Man kann kalthärtende Harze verwenden, bevorzugt sind jedoch lichthärtende Harze.

Bei kalthärtenden Systemen besteht die Harzmischung vorzugsweise aus
100 Gew.-Teilen eines Polyesterharzes,
0 - 50 Gew.-Teilen eines Füllstoffs, z.B. Quarzsand, Aluminiumhydroxid oder Kreide,
0 - 4 Gew.-Teilen eines Thixotropiemittels, z.B. hochdisperse Kieselsäure
0,2 - 5 Gew.-Teilen eines Beschleunigers, z.B. Cobaltoctoat, Cobaltnaphthenat, Dimethylbenzylamin oder Diisopropanolparatoluidin, und
0,2 - 5 Gew.-Teilen eines in Radikale zerfallenden Peroxids, z.B. Methylethylketonperoxid oder Dibenzoylperoxid.

Die Peroxide werden der Harzmischung kurz vor der Tränkung des Fasergebildes zugesetzt.

Bei lichthärtenden Systemen besteht die Harzmischung vorzugsweise aus
100 Gew.-Teilen Polyesterharz,
0 - 50 Gew.-Teilen eines UV durchlässigen Füllstoffs, z.B. Glasmehl oder Aluminiumoxidhydrat,
0 - 4 Gew.-Teilen eines Thixotropiemittels, z.B. hochdisperse Kieselsäure und
0,02 - 5 Gew.-Teilen eines Lichtinitiators, z.B. eines Acylphosphinoxids, Bisacylphosphinoxids, Benzilketals oder Benzinethers.

In diesem Fall wird die Härtung durch Bestrahlung mit UV-Licht oder Sonnenlicht durchgeführt.

Eine deutliche Verbesserung der Haftung auf den PE-beschichteten Randbereichen kann erreicht werden, wenn vor dem Laminieren Verstärkungsfasern (z.B. in Form von Glasmatten, Glasgewebe, Glasvlies oder entsprechende organische Verstärkungsfasern) in das PE teilweise eingebracht werden. Dazu wird das PE durch Wärmezufuhr (z.B. durch Infrarotstrahlung, Heißluftgebläse oder Erwärmung des Stahlrohrs) auf 100 bis 150°C kurzzeitig erwärmt und dabei aufgeschmolzen. In das warme PE wird das Verstärkungsmaterial eingedrückt, so daß die Fasern zum Teil mit PE benetzt sind. Als besonders vorteilhaft für diese Anwendung haben sich Glasmatten erwiesen. Nach dem Erkalten des PE können die nicht mit PE benetzten Glasfilamente abgezogen werden. Dadurch ist eine optische Qualitätsbeurteilung der zu erzielenden Haftung bereits in diesem Stadium möglich. Für den Anwendungsfall ist es möglich, das Einbringen der Glasmatte in das PE bereits werkseitig durchzuführen, so daß dieser Arbeitsgang nicht vor Ort durchgeführt werden muß. Eine Beschmutzung der Glasmatte während des Transports kann z.B. durch eine Schutzfolie vermieden werden.

Die Abbildung zeigt eine bevorzugte Ausführungsform der Erfindung.

Mit (1) sind die Wände von zwei Stahlrohren bezeichnet, die durch die Schweißstelle (2) miteinander verbunden sind. (3) ist die PE-Beschichtung, die im Bereich der Schweißstelle fehlt. In diese PE-Beschichtung sind Verstärkungsfasern (4) eingedrückt. Laminate aus Glasmatten (5), die mit Harz (6) getränkt sind, sind auf den unbeschichteten Bereich aufgebracht, wobei die oberen Laminate mit dem beschichteten Bereich überlappen.

Der erfindungsgemäße Korrosionsschutz ist besonders für Gasleitungen geeignet, er kann aber auch bei Erdöl-, Abwasser- und Wasserleitungen angewandt werden.

### Beispiel 1

Auf eine durch Sandstrahlen bis zu einem Oberflächenreinheitsgrad SA 2 1/2 (DIN 55 928 T 4) gereinigte, 30 cm breite Schweißstelle eines PE beschichteten Stahlrohres (Wanddicke 5 mm, Dicke der PE-Beschichtung 3 mm) wird zunächst ein thixotrop eingestelltes lichthärtendes Polyesterharz (PALATAL P 92^{I} der BASF) auf Basis Isophthalsäure, Maleinsäure, Propylenglykol und Neopentylglykol aufgebracht. Anschließend wird eine Glasmatte (Breite 30 cm, entspricht der Breite der unbeschichteten Stelle) um das Rohr gewikkelt und mit Harz getränkt. Dies wird wiederholt, bis die Schichtstärke des PE von 3 mm erreicht ist. Anschließend wird eine 50 cm breite Glasmatte derart um das Rohr gewickelt, daß auf beiden Seiten 10 cm des PE beschichtet werden. Beim Imprägnieren mit Harz wird darauf geachtet, daß das PE und alle Glasfasern gut mit Harz benetzt sind. Die Gesamtstärke der Beschichtung beträgt ca. 4 cm.

### Beispiel 2

Versuch 1 wird wiederholt, jedoch wird zuvor auf jeder Seite 10 cm des PE mit einem Heißluftgebläse aufgeschmolzen und eine Glasmatte in das geschmolzene PE gedrückt. Nach dem Erkalten des PE werden nichtanhaftende Fasern entfernt. Anschließend wird wie in Versuch 1 verfahren.

### Beispiel 3

Anstelle der Glasmatte in Versuch 2 wird ein Glasgewebe verwendet.

### Beispiel 4

Anstelle des Polyesterharzes in Versuch 2 wird ein lichthärtend eingestelltes Vinylesterharz auf Bisphenol A Basis (PALATAL A 430 der BASF) verwendet.

Nach Beendigung der Laminierarbeiten werden die Rohrstücke zwischen 4 UV Lampen plaziert und 10 min bestrahlt. Nach Beendigung der Bestrahlungszeit wird gewartet, bis das gehärtete Laminat Raumtemperatur erreicht hat. Anschließend wird die Haftung mit einem Schraubenzieher vergleichend getestet.

Dabei ergibt sich, daß die Beschichtungen auch mit großem Kraftaufwand nicht beschädigt werden können. Die Separation des Laminats von der PE-Beschichtung ist beim Versuch 1 bei erheblichem Kraftaufwand möglich, bei den Versuchen, 2, 3 und 4 jedoch nicht mehr. Hier wird stets nur die an das Laminat angrenzende Polyethylenbeschichtung geschädigt.

## Patentansprüche

1. Kunststoffbeschichtetes Stahlrohr mit Korrosionsschutz an den Schweißstellen, **dadurch gekennzeichnet, daß** das Stahlrohr im Bereich der Schweißstellen als Korrosionsschütz Laminate aus faserverstärkten, gehärteten ungesättigten Polyesterharzen aufgebracht sind, wobei die Laminate mit den kunststoffbeschichteten Bereichen überlappen.

2. Stahlrohr nach Anspruch 1, **dadurch gekennzeichnet, daß** das Stahlrohr einen Durchmesser von 10 bis 200 cm und eine Wanddicke von 3 bis 15 mm aufweist, daß der unbeschichtete Bereich an den Schweißstellen 10 bis 80 cm und die Überlappung auf beiden Seiten 3 bis 30 cm breit ist.

3. Stahlrohr nach Anspruch 1, **dadurch gekennzeichnet, daß** die Kunststoffbeschichtung 2 bis 10 mm dick ist und die Korrosionsschutzschicht 0,5 bis 5 mm dicker ist.

4. Stahlrohr nach Anspruch 1, **dadurch gekennzeichnet, daß** die Kunststoffbeschichtung aus Polyethylen besteht.

5. Verfahren zum Aufbringen von Korrosionsschutz an den Schweißstellen von kunststoffbeschichteten Stahlrohren nach Anspruch 1, **dadurch gekennzeichnet, daß** man auf unbeschichtete Schweißstellen der Stahlrohre Matten, Gewebe oder Vliese aus Glasfasern oder organischen Fasern anbringt, die mit einer bei Raumtemperatur härtenden Mischung aus
100 Gew.-Teilen eines Polyesterharzes,
0 - 50 Gew.-Teilen eines Füllstoffs,
0 - 4 Gew.-Teilen eines Thixotropiemittels,
0,2 - 5 Gew.-Teilen eines Amin- oder Cobaltbeschleunigers und
0,2 - 5 Gew.-Teilen eines in Radikale zerfallenden Peroxids
getränkt werden oder getränkt sind, und das Harz härtet.

6. Verfahren zum Aufbringen von Korrosionsschutz an den Schweißstellen von kunststoffbeschichteten Stahlrohren nach Anspruch 1, **dadurch gekennzeichnet, daß** man auf unbeschichtete Schweißstellen der Stahlrohre Matten, Gewebe oder Vliese aus Glasfasern oder organischen Fasern aufbringt, die mit einer Mischung aus
100 Gew.-Teilen eines Polyesterharzes,
0 - 50 Gew.-Teilen eines UV durchlässigen Füllstoffs,
0 - 4 Gew.-Teilen eines Thixotropiemittels, und
0,02 - 5 Gew.-Teilen eines Lichtinitiators
getränkt werden oder getränkt sind, und anschließend unter UV-Bestrahlung das Harz härtet.

7. Verfahren nach den Ansprüchen 5 und 6, **dadurch gekennzeichnet, daß** man an den unbeschichteten Schweißstellen von mit Polyethylen beschichteten Stahlrohren zunächst in dem Randbereich der Schweißstellen die Polyethylenbeschichtung auf 100 bis 150°C erwärmt, in das erweichte Polyethylen Verstärkungsfasern eindrückt, dann nach Abkühlen die Harzlaminate auf die Schweißstellen und Randbereiche aufbringt und schließlich das Harz härtet.

8. Verfahren zum unterirdischen Verlegen von kunststoffbeschichteten Stahlrohren mit Korrosionsschutz an den Schweißstellen, **dadurch gekennzeichnet, daß** an unbeschichteten Schweißstellen eines Rohrstrangs aus miteinander verschweißten Stahlrohren der Korrosionsschutz nach Anspruch 1 aufgebracht wird, und der Rohrstrang in einen Graben verlegt oder in ein vorgefertigtes Bohrloch eingezogen wird.

9. Verfahren zum unterirdischen Verlegen von kunststoffbeschichteten Stahlrohren unter Hindernissen, **dadurch gekennzeichnet, daß** man ein 10 bis 25 m langes Rohr in einen Graben vor dem Hindernis einlegt, durch vibrierende Bewegung weitgehend in das Erdreich eintreibt, an das herausragende Ende des Rohres ein weiteres Rohr anschweißt, an der unbeschichteten Schweißstelle den Korrosionsschutz nach Anspruch 1 aufbringt, die verschweißten Rohre weiter in das Erdreich eintreibt und dies so lange fortführt, bis das Hindernis unterfahren ist.

## Claims

1. Plastic-coated steel pipe with corrosion protection on the welds, **characterised in that** laminates of fibre-reinforced, cured, unsaturated polyester resins are applied to the steel pipe on the area around the welds as corrosion protection, the laminates overlapping the plastic-coated areas.

2. Steel pipe according to claim 1, **characterised in that** the steel pipe has a diameter of 10 to 200 cm and a wall thickness of 3 to 15 mm, that the uncoated area on the welds is 10 to 80 cm wide and the overlap on both sides 3 to 30 cm wide.

3. Steel pipe according to claim 1, **characterised in that** the plastic coating is 2 to 10 mm thick and the corrosion protection layer is 0.5 to 5 mm thicker.

4. Steel pipe according to claim 1, **characterised in that** the plastic coating consists of polyethylene.

5. Process for the application of corrosion protection to the welds of plastic-coated steel pipes according to claim 1, **characterised in that** mats, cloths or fleeces of glass fibres or organic fibres, which are soaked or have been soaked with a room temperature curable mixture of
100 parts by weight of a polyester resin
0 - 50 parts by weight of a filler
0 - 4 parts by weight of a thixotroping agent
0.2 to 5 parts by weight of an amine or cobalt accelerator
and
0.2 to 5 parts by weight of a peroxide decomposing into radicals,
are applied to uncoated welds of the steel pipes, and the resin is cured.

6. Process for the application of corrosion protection to the welds of plastic-coated steel pipes according to claim 1, **characterised in that** mats, cloths or fleeces of glass fibres or organic fibres, which are impregnated or have been impregnated with a mixture of
100 parts by weight of a polyester resin
0 - 50 parts by weight of a UV-permeable filler
0 - 4 parts by weight of a thixotroping agent, and
0.02 - 5 parts by weight of a light-initiator
are applied to uncoated welds of steel pipes and the resin is then cured by UV irradiation.

7. Process according to claims 5 and 6, **characterised in that**, on the uncoated welds of steel pipes coated with polyethylene, the polyethylene coating in the area bordering the welds is first heated to 100 to 150°C, reinforcing fibres are pressed into the softened polyethylene and, after cooling, the resin laminates are applied to the welds and bordering areas and the resin is finally cured.

8. Process for the underground laying of plastic-coated steel pipes with corrosion protection on the welds, **characterised in that** the corrosion protection according to claim 1 is applied to the uncoated welds of a pipe string of steel pipes welded together and the pipe string is laid in a trench or drawn into a pre-formed borehole.

9. Process for the underground laying of plastic-coated steel pipes beneath obstacles, **characterised in that** a 10 to 25 m long pipe is laid in a trench in front of the obstacle, driven far into the ground with a vibrating action, a further pipe is welded onto the end of the pipe protruding from the ground, the corrosion protection according to claim 1 is applied to the uncoated weld, the welded pipes are driven further into the ground and this is continued until the pipes have been driven under the obstacle.

## Revendications

1. Tuyau en acier revêtu de plastique comportant aux endroits soudés une protection contre la corrosion, **caractérisé par le fait que** sur le tuyau en acier, dans la zone des endroits soudés, sont appliqués, comme protection contre la corrosion, des stratifiés de résine de polyester insaturées, armées de fibres, durcissés, les stratifiés venant à recouvrement avec les zones revêtues de plastique.

2. Tuyau en acier selon la revendication 1, **caractérisé par le fait que** le tuyau en acier présente un diamètre de 10 à 200 cm et une épaisseur de paroi de 3 à 15 mm, que la zone non revêtue aux endroits soudés a une largeur de 10 à 80 cm et que le recouvrement des deux côtés a une largeur de 3 à 30 cm.

3. Tuyau en acier selon la revendication 1, **caractérisé par le fait que** le revêtement de plastique a une épaisseur de 2 à 10 mm et que la couche de protection contre la corrosion donne une surépaisseur de 0,5 à 5 mm.

4. Tuyau en acier selon la revendication 1, **caractérisé par le fait que** le revêtement de plastique est constitué de polyéthylène.

5. Procédé d'application d'une protection contre la corrosion aux endroits soudés de tuyaux en acier revêtus de plastique, selon la revendication 1, **caractérisé par le fait que** l'on applique aux endroits soudés non revêtus des tuyaux en acier des tapis, des toiles ou des voiles de fibres de verre ou de fibres organiques, que l'on imprègne, ou qui sont imprégnés, d'un mélange durcissant à la température ambiante, de
100 parties en poids d'une résine de polyester,
0 - 50 parties en poids d'une charge,
0 - 4 parties en poids d'un agent de thixotropie,
0,2 - 5 parties en poids d'un accélérateur à base d'amine ou de cobalt et
0,2 - 5 parties en poids d'un peroxyde se dégradant en radicaux et que l'on fait durcisser la résine.

6. Procédé d'application d'une protection contre la corrosion aux endroits soudés de tuyaux en acier revêtus de plastique, selon la revendication 1, **caractérisé par le fait que** l'on applique aux endroits soudés non revêtus des tuyaux en acier des tapis, des toiles ou des voiles de fibres de verre ou de fibres organiques, que l'on imprègne, ou qui sont imprégnés, d'un mélange durcissant à la température ambiante, de
100 parties en poids d'une résine de polyester,
0 - 50 parties en poids d'une charge transparente aux UV,
0 - 4 parties en poids d'un agent de thixotropie, et
0,02 - 5 parties en poids d'un initiateur de polymérisation à la lumière et qu'ensuite on fait durcisser la résine par irradiation aux UV.

7. Procédé selon la revendication 5 et 6, **caractérisé par le fait qu'**aux endroits soudés non revêtus de tuyaux en acier revêtus de polyéthylène, on chauffe tout d'abord le revêtement de polyéthylène pour le porter à 100 à 150° C dans la zone de bordure des endroits soudés, que l'on enfonce les fibres d'armature dans le polyéthylène ramolli, puis qu'après refroidissement on applique les stratifiés de résine sur les endroits soudés et les zones de bordure et que finalement on fait durcisser la résine.

8. Procédé de pose sous terre de tuyaux en acier revêtus de plastique présentant une protection contre la corrosion aux endroits soudés, **caractérisé par le fait qu'**aux endroits soudés non revêtus d'une longueur de tuyau constituée de tuyaux en acier soudés l'un à l'autre, on applique la protection contre la corrosion selon la revendication 1 et que l'on pose la longueur du tuyau dans une tranchée ou qu'on l'enfile dans un percement préfabriqué.

9. Procédé de pose sous terre de tuyaux en acier revêtus de plastique sous les obstacles, **caractérisé par le fait qu'**avant l'obstacle on pose un tuyau de longueur 10 à 25 m dans une tranchée, qu'on le pousse largement dans le terrain par un mouvement de vibration, qu'à l'extrémité du tuyau qui sort on soude un autre tuyau, qu'à l'endroit soudé non revêtu on applique la protection contre la corrosion selon la revendication 1, que l'on continue à pousser dans le terrain les tuyaux soudés et que ceci se poursuit jusqu'à ce que l'on soit passé sous l'obstacle.
